# EUROPÄISCHE PATENTSCHRIFT

(11) **EP 2 030 770 B1**
(45) Veröffentlichungstag und Bekanntmachung des Hinweises auf die Patenterteilung: **02.01.2019**
(21) Anmeldenummer: 08158840.2
(22) Anmeldetag: 24.06.2008
(51) Int. Cl.: B29D 22/02

(54) **Verfahren und Vorrichtung zum Umbucken eines unvulkanisierten Rohlings**
Method and device for folding back an unvulcanised blank
Procédé et dispositif destinés à replier une ébauche non vulcanisée

(30) Priorität: 30.08.2007 DE 102007040918
(43) Veröffentlichungstag der Anmeldung: 04.03.2009
(73) Patentinhaber: Continental Teves AG & Co. OHG, 60488 Frankfurt am Main (DE)
(72) Erfinder: Warthemann, Jens, 30826 Garbsen (DE)

(56) Entgegenhaltungen:
- GB-A- 846 244
- US-A- 3 018 518
- US-A- 4 054 476

## Beschreibung

Die Erfindung betrifft ein Verfahren zum Umbucken eines unvulkanisierten Rohlings eines Luftfeder-Rollbalges, bei dem der Rohling auf ein als teilweise hohle Hülse und teilweise als mit Betätigungseinrichtungen versehener Dorn ausgebildetes Innenwerkzeug aufgesetzt wird und an mindestens einem Ende des Rohlings über einen Teilbereich seiner Länge mit Hilfe eines Blähbalges bis zur Anlage in ein hülsenförmig das Innenwerkzeug und den Rohling umgebendes Außenwerkzeug aufgeweitet und danach unter Abrollen des Blähbalges im Ringraum zwischen Innen- und Außenwerkzeug umgebuckt, d.h. auf sich selbst umgeschlagen wird, wobei das Außenwerkzeug während des Umbuckens solange relativ und koaxial zum Innenwerkzeug in Richtung auf das nicht aufgeblähte Ende des Rohlings verfahren wird, bis der gesamte aufgeweitete Bereich des Rohlings sukzessive umgebuckt ist. Ebenso betrifft die Erfindung eine Vorrichtung, die in besonderer Weise zur Durchführung des Verfahrens geeignet ist.

Luftfedern sind bekannte Federungselement für die Fahrwerke von Fahrzeugen. Eine solche Luftfeder weist in der Regel mindestens einen mit Druckluft gefüllten Arbeitsraum auf, der mindesten teilweise durch einen Rollbalg begrenzt wird. Der Rollbalg rollt mindestens teilweise auf Abrollkonturen ab, oft auf der Außenseite des Luftfederkolbens, und ist an seinen Enden an Anschlussteilen reib- und/oder formschlüssig befestigt.

In nicht wenigen Fällen sind Rollbälge und an mindestens einem ihrer Enden partiell mit einer im Verhältnis zum restlichen Rollbalgkörper dickeren Wand und/oder zusätzlichen Materiallagen versehen, um hohe Klemmkräfte oder senkrecht zu ihrer Achse wirkende Kräfte aufnehmen zu können. Rollbälge von Luftfedern sind nämlich nicht nur durch Klemmkräfte an den Einspannstellen zu den Anschlussteilen hoch belastet, sondern auch in den Bereichen, in denen die Rollbälge senkrecht zu ihrer Achse wirkende Kräfte aufnehmen müssen, also etwa Radführungskräfte. Solche Kräfte bewirken eine leichte Auslenkung des Balges senkrecht zu seiner Achse und belasten damit gerade die "freien" Querschnitte des Rollbalges außerhalb der Einspannbereiche. Bei dünnen Rollbälgen kann dies problematisch werden.

Dünne Rollbälge sind aber zur Steigerung eines komfortablen Federungsverhaltens und zur Reduktion des so genannten Harshness-Verhaltens oft gewünscht. Der Fachmann versteht unter dem Begriff "Harshness" ein überlagertes, etwas raues, hartes Federungsverhalten bei Schwingungen höherer Frequenz und geringer Amplitude, das durch die Abhängigkeiten von den für Luftfeder- und Dämpfereinheiten gebräuchlichen Bauweisen, Materialien, Eigendämpfungen, Trägheiten etc. entsteht.

Im Hinblick auf die für dünne Rollbälge kritischen Klemmkräfte offenbart die WO 2004/067989 A1 eine Luftfeder mit einem Rollbalg, bei welchem beide Endbereiche mit kurzen Lagenumschlägen versehen bzw. zurückgestülpt oder "umgebuckt" sind. Dieses Zurückstülpen oder Umbucken, d.h. das Umschlagen auf sich selbst, erfolgt jedoch erst nach der Vulkanisation des Rollbalges. Bei einem möglichst dünnen und damit komfortabel federnden Rollbalg liegt der Grund für diesen Umschlag darin, dass der Rollbalg im Einspannbereich an die Anschlussteile, also im Einspannbereich des Deckels oder des Abrollkolbens, verdickt, d.h. verdoppelt werden soll. Dies wiederum ist bei einem dünnen Balg erforderlich, um bei hohen Klemmkräften keine Materialschäden durch Quetschungen durch die Spannringe zu riskieren. Bei dieser Luftfeder wird der Lagenumschlag erst nach der Vulkanisation des Balges und nur im Einspannbereich an letzterem angebracht. Eine Verstärkung der restlichen Rollbalglänge findet nicht statt.

Um auch bei dünnen Wandstärken die erforderlichen Festigkeiten zu erreichen, werden Rollbälge üblicherweise als gewebeverstärkte Gummibälge hergestellt, wobei in der Gummimatrix des Rollbalges mehrere Gewebe- oder Cordlagen übereinander angeordnet sein können, deren Fäden in Winkeln den Rollbalg umlaufen. Oft verwendet man Lagen mit sich kreuzenden Fäden (bezogen auf den fertigen Rollbalg).

Eine weitere Möglichkeit, ein komfortables Federungsverhalten und geringere "Harshness" mit dünneren Rollbälge zu erreichen, besteht darin, die Rollbälge bzw. die Luftfedern oder -dämpfer mit so genannten Außenführungen zu versehen, nämlich mit einem den Rollbalg umgebenden rohrförmigen "Stützkorsett" oder Stützkörper. So lässt sich beispielsweise ein dünner Rollbalg mit einem dünnen Leichtmetallrohr als Stützkörper umgeben.

Die Außenführungen können dabei mit dem Luftfederdeckel direkt verbunden sein, so dass der Rollbalg einerseits an der Außenseite des Abrollkolbens und andererseits an der Innenoberfläche der Außenführung abrollen kann. Die für die Rollfalte verbleibende Differenz zwischen Innendurchmesser der Außenführung und Außendurchmesser des Abrollkolbens ist dabei relativ gering. Damit entsteht das Problem, dass senkrecht zur Achse des Rollbalges wirkende Kräfte kaum aufgenommen werden können, da auch nur geringste Auslenkungen des Balges im Zwischenraum (Innendurchmesser der Außenführung - Außendurchmesser des Abrollkolbens) bereits den Rollbalg auf Dauer schädigen können.

Eine Lösung für dieses technische Problem besteht darin, dass die Außenführung nicht am Luftfederdeckel befestigt ist, sondern mit etwas Abstand zu letzterem am Rollbalg als solchen. Dies geschieht beispielsweise durch einen Klemmring auf der Innenseite des Rollbalges, der die den Rollbalg umgebende Außenführung an ihrem oberen Ende fest auf den Rollbalg klemmt. Der senkrechte Abstand zwischen Luftfederdeckel und Außenführung, d.h. das nicht von der Außenführung umgebende deckelnahe Teilstück des Rollbalges kann nun als "Gelenk" genutzt werden, dass die Schwenkbarkeit des Luftfederbalges trotz Außenführung ermöglich und damit wieder die durch senkrecht zur Achse des Rollbalges wirkende Kräfte erzeugten Auslenkungen zulässt. Im Fachbereich ist dieses Teilstück des Rollbalges als "Kardanikfalte" oder "Kardanikgelenk" bekannt.

Natürlich ist diese Kardanikfalte stark belastet, so dass zur partiellen Verstärkung des Rollbalges bereits bei seiner Herstellung zusätzliche Materiallagen, nämlich Gewebe- und/oder Gummilagen im Bereich der später nach und durch den Zusammenbau der Luftfeder entstehenden Kardanikfalte vorgesehen werden. Das Auflegen zusätzlicher Gewebe- und/oder Gummilagen ist jedoch nur bei einer Einzelfertigung von Rollbälgen möglich und auch dort mit erheblichem zusätzlichen Fertigungsaufwand verbunden. Bei einer kontinuierlichen Fertigung von Rollbälgen "am Strang" besteht bisher nur die Möglichkeit, entweder auf eine Verstärkung der Kardanikfalte zu verzichten, oder aber den gesamten Rollbalgstrang zu verstärken. Letzteres ist, wie oben bereits geschildert, aus Gründen des Komforts und der "Harshness" ungewünscht.

Eine Lösung für diese Problematik besteht nun zum Beispiel darin, dass der Rollbalg an mindestens einem seiner verstärkten Enden einen durchgehend vulkanisierten Lagenumschlag aufweist, der vor der Vulkanisation in einer solchen Länge zurückgestülpt und vulkanisiert ist, dass nach Zusammenbau der Luftfeder mindestens ein durch Fahrwerkskräfte hoch belasteter Bereich des Rollbalges in den Bereich des Lagenumschlages fällt. Solche vor der Vulkanisation zu erstellenden Lagenumschläge sind jedoch bisher nur mühsam und teilweise durch einen hohen Anteil manueller Fertigung herzustellen.

Allerdings sind bei Rollbälgen mit Kemringen Verfahren und Vorrichtungen zum Umbucken der Enden des Rollbalgrohlings vor der Vulkanisation bekannt. Diese Rollbälge weisen an ihren Enden im Gummimaterial eingebettete und einvulkanisierte Verstärkungsringe / Kemringe aus Metall auf, mit deren Hilfe sie an den Anschlussteilen festgespannt werden können.

Die FR 1.187.975 offenbart ein Verfahren zum Umbucken eines Endes eines unvulkanisierten Rollbalges, bei dem der Rohling zunächst an einem Ende eingezogen, d.h. im Durchmesser verkleinert und dann in einem Abstand vom Ende des Rohlings ein metallischer Kernring um den verkleinerten Durchmesser aufgelegt wird. Danach erfolgt der nun örtlich definierte Lagenumschlag um den Kernring mit Hilfe einer Anzahl von ringförmig angeordneten Hebelarmen, die mechanisch aufgespreizt und dabei axial verfahren werden und das Rohlingsende somit umbucken.

Nachteilig ist hierbei sowohl die punktuelle mechanisch-reibende Belastung des Rohlings durch einzelne Hebelarme, als auch Notwendigkeit, dass zur exakten Definition des Nachteilig ist hierbei sowohl die punktuelle mechanisch-reibende Belastung des Rohlings durch einzelne Hebelarme, als auch Notwendigkeit, dass zur exakten Definition des Umschlagspunktes ein Kernring vorhanden ist. Dieser Kernring ist zwar zur Verstärkung der Aufspannung des Rollbalges vorgesehen, jedoch ist ohne einen solchen Ring auch ein definiertes Umbucken nach diesem Verfahren nicht möglich.

Die US 3,018,518 offenbart eine ähnliche Vorrichtung zum Umschlagen der Enden eines unvulkanisierten Rollbalgrohlings um einen Kernring, bei der bereits das Ende mit dem geringeren Durchmesser mit Hilfe eines rückrollenden und mit einem Innendruck versehenen Blähbalges umgebuckt wird, gemäß dem Oberbegriff des Anspruchs 5. Wenn hierbei auch Schädigungen des Rohlings durch mechanische Belastungen mindestens an einem Ende vermieden werden, so ist doch immer noch ein definiertes Umbucken nach diesem Verfahren ohne Kernring nicht möglich.

Die US-A-3018518 offenbart ebenfalls ein Verfahren zum Umschlagen eines unvulkanisierten Rohlings um einen Kernring, wobei mit Hilfe eines rückrollenden und mit Innendruck beaufschlagten Blähbalgs umgeschlagen wird. Dieser Kernring ist wesentlich für ein definiertes und in seiner Länge begrenztes Umschlagen des Rohlings.

Für die Erfindung bestand daher die Aufgabe, ein Verfahren und eine Vorrichtung zur Herstellung eines Luftfederbalges mit einem vulkanisierten Lagenumschlag bereitzustellen, bei dem das Umbucken ohne Einlage von Kernringen vor der Vulkanisation möglichst einfach und automatisiert in einem kontinuierlichen Herstellungsprozess erfolgen kann.

Gelöst wird diese Aufgabe durch die Merkmale des Verfahrensanspruchs 1. Weitere vorteilhafte Ausbildungen sind in den Unteransprüchen offenbart. Ebenfalls wird diese Aufgabe durch die Merkmale des unabhängigen Vorrichtungsanspruches 5 gelöst.

Das erfindungsgemäße Verfahren ist dabei so ausgebildet, dass die Umbuckfalte des Rohlings durch eine
zwischen Dorn und Innenhülse sich an das umgeschlagene Ende es Blähbalgs anschließende ringförmig umlaufende Nut in der Aussenkontur des Innenwerkzeuges erzeugt wird, wobei die Nut eine Mindestbreite von 3 mm aufweist und der Rohling auf dem Innenwerkzeug mindestens während des Umbuckens festgehalten wird. Durch eine solche Verfahrensausbildung ergibt sich auch ohne einen übergeschobenen Kernring eine stets an derselben festgelegten Stelle ausgebildete Umbuckfalte, wobei gleichzeitig ein besonders materialschonender Umschlag des Endes des unvulkanisierten Rohlings auf sich selbst erfolgt.

Eine vorteilhafte Ausbildung besteht darin, dass der Rohling während des Umbuckens auf dem Innenwerkzeug durch einen auf die Innenseite des Rohlings wirkenden Unterdruck festgehalten wird. Damit verhindert man sicher, dass sich der Rohling auf seiner Innenhülse verschiebt.

Eine weitere vorteilhafte Ausbildung besteht darin, dass der Rohling während des Umbuckens durch ein leichtes Aufweiten eines Teilbereiches des Innenwerkzeuges festgehalten wird. Auch hierdurch wird auf einfache Weise, ggf. auch im Zusammenwirken mit Unterdruck, ein verschieben des Rohlings während des Umbuck-Vorgangs verhindert.

Eine vorteilhafte Ausbildung besteht darin, dass der Rohling einseitig an einem Anschlag des Innenwerkzeugs anliegt. Dadurch erleichtern sich die stets gleiche Positionierung und damit die Reproduzierbarkeit eines stets gleichen Abstands der Umbuckfalte zum Rohlings-Ende.

Eine weitere vorteilhafte Ausbildung besteht darin, dass der Innendruck des aufweitbaren Blähbalges mindestens 5 bar beträgt. Aufgrund der bei dem Rohling noch vorhandenen Konfektionsklebrigkeit wird etwa ab einem solchen Mindestdruck der umgebuckte Bereich des Rohlings, d.h. der Umschlag es unvulkanisierten Rohlings auf sich selbst kalt aufgepresst, im Umschlagbereich also quasi verklebt und somit nahtfrei und ohne Lufteinschlüsse zu einem verdickten einstückigen Ende gefügt.

Eine für die Durchführung des erfindungsgemäßen Verfahrens besonders geeignete Vorrichtung soll anhand eines Ausführungsbeispieles dargestellt werden. Es zeigen
- Fig. 1: eine erfindungsgemäße Vorrichtung im Längsschnitt,
- Fig. 2: den vergrößerten mittleren Teil der Vorrichtung aus Fig. 1 im Längsschnitt, jedoch mit einer anderen Ausführung des Domes,
- Fig. 3: eine Prinzipskizze zur Funktionsweise der erfindungsgemäßen Vorrichtung im Schnitt.

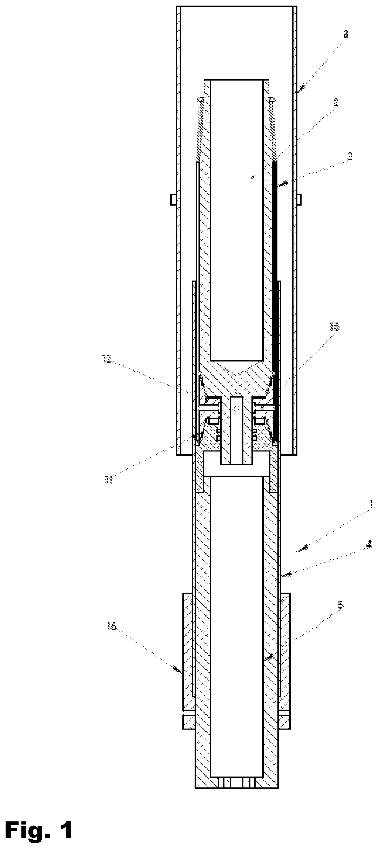

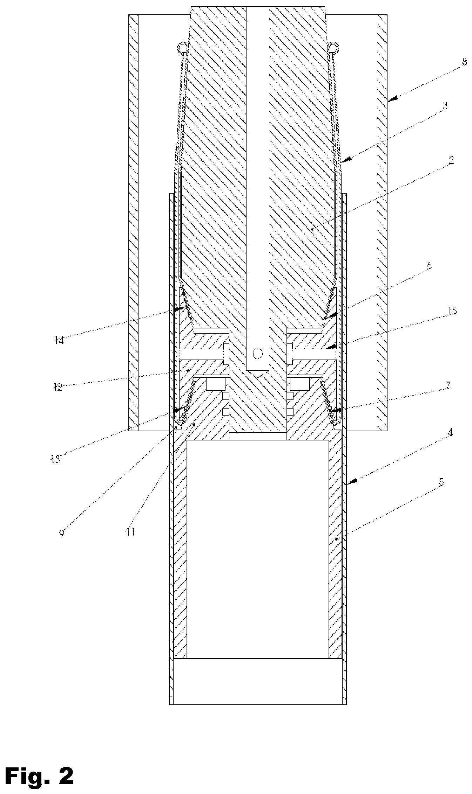

Wie in Fig. 1 und 2 gezeigt, ist die Vorrichtung ist so ausgebildet, dass das Innenwerkzeug 1 aus einem mit Betätigungseinrichtungen versehenen Dorn 2 mit einem letzteren umgebenden Blähbalg 3 zur Aufnahme der umzubuckenden Länge des Rohlings 4 sowie mit einer koaxial zum Dorn 2 angeordneten Innenhülse 5 zur Aufnahme der restlichen Länge des Rohlings 4 besteht.

Der Blähbalg 3 umgibt den Dorn 2 schlauchartig. Dabei sind die Enden (6, 7) des Blähbalges 3 jeweils innerhalb desselben nach innen umgeschlagen und mit Abstand zueinander am Dorn 2 und/oder am Hülsenende 11 befestigt. Die Vorrichtung weist als Außenwerkzeug einen das Innenwerkzeug 1 und den Rohling 4 hülsenförmig umgebenden Hohlzylinder 8 auf, der relativ und koaxial zum Innenwerkzeug 1 in Richtung auf das nicht aufgeblähte Ende des Rohlings 4 verfahrbar ausgebildet ist.

Durch eine solcherart gestaltete Vorrichtung ist ein mechanisch schonendes Aufweiten und Umschlagen des Rohlings 4 gewährleistet, wobei der Rohling durch den Blähbalg 3 und die Innenwand des Hohlzylinders 8 sicher abgestützt und ohne Reibung auf sich selbst umgeschlagen wird.

Vorteilhafterweise ist die Vorrichtung so ausgebildet, dass zwischen Dorn 2 und Innenhülse 5 eine umlaufende Unstetigkeit auf dem Umfang des Innenwerkzeugs vorgesehen ist, nämlich hier als eine an das umgeschlagene Ende des Blähbalges 7 sich anschließende umlaufende Nut 9 im Außenumfang des Innenwerkzeugs vorgesehen ist.

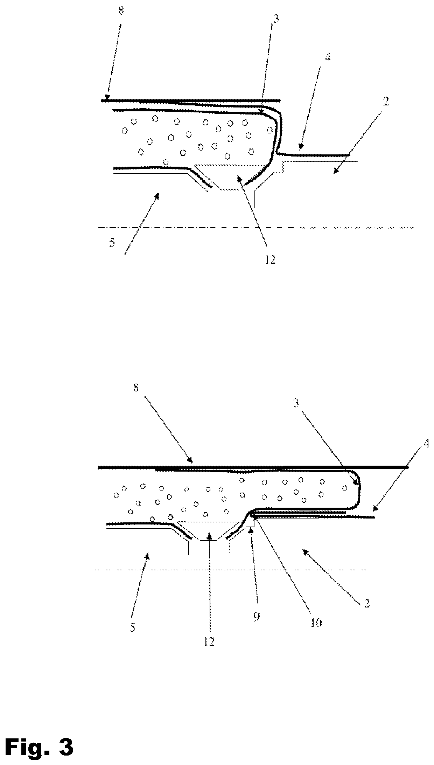

In einer solchen Ausbildung der Vorrichtung weist die Nut 9 eine Mindestbreite von 3 mm auf, nämlich hier eine Breite von 5 mm. Dadurch formt sich auf jeden Fall die Umschlagfalte 10 bei Beginn des Umbuckens reproduzierbar in diesem Nutbereich, wie auch die Fig. 3 zeigt.

Vorteilhafterweise, jedoch hier nicht näher dargestellt, ist die Vorrichtung so ausgebildet, dass die Hülse 5 an ihrem dem Dorn 2 zugewandten Ende eine Kontur ihres Umfangs aufweist, in die sich das der Hülse 5 nächstliegende umgeschlagene Ende des Blähbalges 3 einlegt. Die Nut 9 schließt sich dann - in Längsrichtung gesehen - an diese Kontur an. Die Kontur ist dabei in der Regel etwas konkav, also mit einem bereichsweise leicht verringerten und mit sanften Übergängen versehenen Außendurchmesser der Hülse ausgebildet. Im Zusammenwirken mit der Nut 9 stützt diese Ausbildung das reproduzierbare Umschlagen des Balges an immer derselben Stelle.

Eine weitere vorteilhafte Ausbildung der hier gezeigten Vorrichtung besteht darin, dass die Enden des Blähbalges 6 und 7 über einen zwischen Dorn 2 und Hülse 5 angeordneten Klemmring 12 mit dem Innenwerkzeug 1 verbunden, d.h. geklemmt sind, wobei insbesondere die einander gegenüberliegenden Enden der Innenhülse 5 und des Domes 2 konisch ausgebildet sind der Klemmring 12 beidseitig eine jeweils komplementär konische Innenkontur 13 und 14 aufweist. Eine solche Konusklemmung ist sicher und in einfachster Weise luftdicht auszuführen, was die Herstellung der Vorrichtung vereinfacht.

Eine vorteilhafte Ausbildung dieser Vorrichtung besteht darin, dass der Klemmring Leitungen 15 für die Zufuhr von Druckmedium unter den Blähbalg 3 aufweist. Auch wenn hierdurch eine Verbindung zu einer Zufuhrleitung im Innenbereich des Klemmringes erforderlich wird, erleichtert auch dies den Bearbeitungaufwand bei der Herstellung des Innenwerkzeuges, da entsprechende Bohrungen für die Leitungen zur Zufuhr von Druckmedium nicht in den im Vergleich zum Klemmring viel schwereren Dorn oder in der Innenhülse eingebracht werden müssen.

Eine weitere vorteilhafte Ausbildung dieser Vorrichtung besteht darin, dass die Innenhülse 5 in ihrer Wand hier nicht näher dargestellte kleinste Bohrungen aufweist, durch welche ein in der Hülse 5 angelegter Unterdruck auf die Innenoberfläche des auf der Außenseite der Hülse 5 anliegenden Rohlings 4 einwirken kann. Damit wird der Rohling 4 sicher auf der Innenhülse 5 fixiert.

Nicht enthalten in diesem Ausführungsbeispiel ist eine weitere vorteilhafte Ausbildung der Vorrichtung, die darin besteht, dass die Innenhülse, ggf. zusätzlich zu der hier ausgeführten Unterdruckversion, mindestens teilweise aufweitbar ausgebildet ist. Dieses Aufweiten kann dabei elastisch über einen weiteren Balg erfolgen, der in einer maximalen Aufweitung etwa durch eine Kettenhülse begrenzt ist, oder auch mechanisch, etwa durch Zylindersegmente, die über einen Innenkegel aufweitbar sind. Durch solche Ausbildungen wäre die Innenoberfläche des auf der Außenseite der Hülse anliegenden Rohlings klemmbar und damit ebenfalls sicher fixiert.

Die Vorrichtung gemäß vorliegendem Ausführungsbeispiel zeigt aber eine weitere vorteilhafte Ausbildung, die darin besteht, dass die koaxial zum Dorn 2 angeordnete Innenhülse 5 mit einem Anschlag 16 zur Anlage des nicht umgebuckten Endes des Rohlings 4 versehen ist. Dadurch erleichtert sich, wie bereits erwähnt, die stets gleiche Positionierung und damit die Reproduzierbarkeit eines stets gleichen Abstands der Umbuckfalte zum Rohlings-Ende.

Eine weitere vorteilhafte Ausbildung der Vorrichtung besteht darin, dass der den Rohling 4 hülsenförmig umgebenden Hohlzylinder 8 mit einer Raststellung für die Anfangsposition vor dem Umbucken versehen ist. Auch dies erleichtert die reproduzierbare Herstellung der Umschlagfalte an stets derselben vorgesehenen Stelle.

Die Fig. 3 zeigt noch einmal eine Prinzipskizze zur Funktionsweise der erfindungsgemäßen Vorrichtung im Schnitt. Hier erkennt man im oberen Teil der Fig. 3 den Anfangszustand und damit den Beginn des erfindungsgemäßen Verfahrens. Dabei ist der Blähbalg 3 bereits mit Druckmedium befüllt und legt sich an die Innenwand des Hohlzylinders 8 an, wobei der Rohling 4 aufgeweitet und zwischen Blähbalg und Innenwand zunächst eingeklemmt wird.

Im unteren Teil der Fig. 3 erkennt man den Endzustand und damit im Wesentlichen den Abschluss des erfindungsgemäßen Verfahrens.

Der Hohlzylinders 8 ist dabei bereits nach rechts verschoben worden, nämlich unter Abrollen des Blähbalges 3 im Ringraum zwischen Hohlzylinder 8 und Innenhülse 5 bzw. Innenwerkzeug 1. Dabei wird der Rohling 4 umgebuckt.

Der Hohlzylinder 8 wird während des Umbuckens solange relativ und koaxial zum Innenwerkzeug 1 bzw. zur Innenhülse 5 in Richtung auf das nicht aufgeblähte Ende des Rohlings 4 verfahren, bis der gesamte aufgeweitete Bereich des Rohlings sukzessive umgebuckt, d.h. auf sich selbst umgeschlagen ist.

Die Umbuckfalte oder Umschlagfalte 10 des Rohlings 4 wird dabei durch die Nut 9 in der Außenkontur des Innenwerkzeuges 1 vorgegeben.

### Bezugszeichenliste

### (Teil der Beschreibung)

- 1: Innenwerkzeug
- 2: Dorn
- 3: Blähbalg
- 4: Rohling
- 5: Innenhülse
- 6: Blähbalgende
- 7: Blähbalgende
- 8: Hohlzylinder
- 9: Nut
- 10: Umschlagfalte des Rohlings
- 11: Hülsenende (Innenhülse)
- 12: Klemmring
- 13: Konische Innenkontur
- 14: Konische Innenkontur
- 15: Leitung für Druckmedium
- 16: Anschlag

## Patentansprüche

1. Verfahren zum Umbucken eines unvulkanisierten Rohlings (4) eines Luftfeder-Rollbalges, bei dem der Rohling (4) auf ein als teilweise hohle Innenhülse (5) und teilweise als mit Betätigungseinrichtungen versehener Dorn (2) ausgebildetes Innenwerkzeug (1) aufgesetzt wird und an mindestens einem Ende über einen Teilbereich seiner Länge mit Hilfe eines unter Innendruck aufweitbaren Blähbalges (3) bis zur Anlage in ein hülsenförmig das Innenwerkzeug (1) und den Rohling (4) umgebendes Außenwerkzeug (8) aufgeweitet und danach unter Abrollen des Blähbalges (3) im Ringraum zwischen Innen- und Außenwerkzeug (1; 8) ohne Kernring umgebuckt wird, wobei das Außenwerkzeug (8) während des Umbuckens solange relativ und koaxial zum Innenwerkzeug (1) in Richtung auf das nicht aufgeblähte Ende des Rohlings (4) verfahren wird, bis der gesamte aufgeweitete Bereich des Rohlings (4) sukzessive umgebuckt ist, wobei die Umbuckfalte des Rohlings (4) durch eine zwischen Dorn (2) und Innenhülse (5) sich an das umgeschlagene Ende (7) des Blähbalgs (3) anschließende ringförmig umlaufende Nut (9) in der Aussenkontur des Innenwerkzeuges erzeugt wird, wobei die Nut (9) eine Mindestbreite von 3 mm aufweist und der Rohling (4) auf dem Innenwerkzeug (1) mindestens während des Umbuckens festgehalten wird.

2. Verfahren nach Anspruch 1, **dadurch gekennzeichnet, dass** der Rohling (4) während des Umbuckens auf dem Innenwerkzeug (1) durch einen auf die Innenseite des Rohlings (4) wirkenden Unterdruck festgehalten wird.

3. Verfahren nach Anspruch 1 oder 2, **dadurch gekennzeichnet, dass** der Rohling (4) während des Umbuckens durch ein Aufweiten eines Teilbereiches des Innenwerkzeuges (1) festgehalten wird.

4. Verfahren nach Anspruch 1 bis 3, **dadurch gekennzeichnet, dass** der aufweitbare Blähbalges (3) einen solchen Mindestdruck aufweist, dass der umgebuckte Bereich des Rohlings (4) auf sich selbst kalt verklebt wird.

5. Vorrichtung zur Durchführung des Verfahrens nach Anspruch 1 bis 4, wobei das Innenwerkzeug (1) aus einem mit Betätigungseinrichtungen versehenen Dorn (2) mit einem letzteren umgebenden Blähbalg (3) zur Aufnahme der umzubuckenden Länge des Rohlings (4) sowie mit einer koaxial zum Dorn (2) angeordneten Innenhülse (5) zur Aufnahme der restlichen Länge des Rohlings (4) besteht, wobei der Blähbalg (3) den Dorn (2) schlauchartig umgibt und die Enden (6; 7) des Blähbalges (3) jeweils innerhalb desselben nach innen umgeschlagen und mit Abstand zueinander am Dorn (2) und/oder am Ende der Innenhülse (5) befestigt sind, wobei die Vorrichtung als Außenwerkzeug einen das Innenwerkzeug (1) und den Rohling (4) hülsenförmig umgebenden Hohlzylinder (8) aufweist, der relativ und koaxial zum Innenwerkzeug (1) in Richtung auf das nicht aufgeblähte Ende des Rohlings (4) verfahrbar ausgebildet ist, **dadurch gekennzeichnet dass** zwischen Dorn (2) und Innenhülse (5) eine an das umgeschlagene Ende (7) des Blähbalges (3) sich anschließende umlaufende Nut (9) im Außenumfang des Innenwerkzeugs (1) vorgesehen ist, wobei die Nut (9) eine Mindestbreite von 3 mm aufweist.

6. Vorrichtung nach Anspruch 5, **dadurch gekennzeichnet, dass** die Hülse (5) an ihrem dem Dorn (2) zugewandten Ende eine Kontur ihres Umfangs aufweist, in die sich das der Hülse (5) nächstliegende umgeschlagene Ende (7) des Blähbalges (3) einlegt.

7. Vorrichtung nach Anspruch 5 oder 6, **dadurch gekennzeichnet, dass** die Enden (6; 7) des Blähbalges (3) über einen zwischen Dorn (2) und Innenhülse (5) angeordneten Klemmring (12) mit dem Innenwerkzeug (1) verbunden sind.

8. Vorrichtung nach Anspruch 7, **dadurch gekennzeichnet, dass** die einander gegenüberliegenden Enden (11) der Innenhülse (5) und des Domes (2) konisch ausgebildet sind der Klemmring (12) beidseitig eine jeweils komplementär konische Innenkontur (13, 14) aufweist.

9. Vorrichtung nach Anspruch 5 bis 8, **dadurch gekennzeichnet, dass** die Innenhülse (5) in ihrer Wand Bohrungen aufweist, durch welche ein in der Innenhülse (5) angelegte Unterdruck auf die Innenoberfläche des auf der Außenseite der Innenhülse (5) anliegenden Rohlings (4) einwirken kann.

10. Vorrichtung nach Anspruch 5 bis 9, **dadurch gekennzeichnet, dass** die Innenhülse (5) mindestens teilweise aufweitbar ausgebildet ist, wodurch die Innenoberfläche des auf der Außenseite der Hülse (5) anliegenden Rohlings (4) klemmbar ist.

11. Vorrichtung nach Anspruch 5 bis 10, **dadurch gekennzeichnet, dass** die koaxial zum Dorn (2) angeordnete Innenhülse (5) mit einem Anschlag (16) zur Anlage des nicht umgebuckten Endes des Rohlings (4) versehen ist.

12. Vorrichtung nach Anspruch 5 bis 11, **dadurch gekennzeichnet, dass** der den Rohling hülsenförmig umgebenden Hohlzylinder mit einer Raststellung für die Anfangsposition vor dem Umbucken versehen ist.

## Claims

1. Method for turning back an unvulcanized blank (4) of an air spring rolling lobe, in which the blank (4) is placed onto an inner tool (1), which is formed as a partly hollow inner sleeve (5) and partly as a mandrel (2) provided with actuating devices and, with the aid of an inflatable bladder (3) that can be made to expand under internal pressure, is expanded at at least one end over part of its length until it is in abutment in an outer tool (8) surrounding the inner tool (1) and the blank (4) in the form of a sleeve, and after that is turned back while the inflatable bladder (3) rolls along in the annular space between the inner tool and the outer tool (1; 8) without a core ring, wherein, during the turning back, the outer tool (8) is moved relatively and coaxially with respect to the inner tool (1) in the direction of the non-inflated end of the blank (4) until the entire expanded region of the blank (4) has successively been turned back, wherein the turning-back fold of the blank (4) is created by an annularly peripheral groove (9) in the outer contour of the inner tool adjoining the turned-back end (7) of the inflatable bladder (3) between the mandrel (2) and the inner sleeve (5), wherein the groove (9) has a minimum width of 3 mm and, at least during the turning back, the blank (4) is securely held on the inner tool (1).

2. Method according to Claim 1, **characterized in that**, during the turning back, the blank (4) is securely held on the inner tool (1) by the negative pressure acting on the inner side of the blank (4).

3. Method according to Claim 1 or 2, **characterized in that**, during the turning back, the blank (4) is securely held by part of the inner tool (1) being made to expand.

4. Method according to Claims 1 to 3, **characterized in that** the expandable inflatable bladder (3) has such a minimum pressure that the turned-back region of the blank (4) is cold-bonded on itself.

5. Device for carrying out the method according to Claims 1 to 4, wherein the inner tool (1) consists of a mandrel (2) provided with actuating devices, with an inflatable bladder (3) surrounding the said mandrel and intended for receiving the length of the blank (4) that is to be turned back and also with an inner sleeve (5) arranged coaxially with respect to the mandrel (2) and intended for receiving the remaining length of the blank (4), wherein the inflatable bladder (3) surrounds the mandrel (2) in the manner of a tube and the ends (6; 7) of the inflatable bladder (3) are in each case turned back inwardly within the same and fastened at a distance from one another to the mandrel (2) and/or to the end of the inner sleeve (5), wherein the device comprises as an outer tool a hollow cylinder (8), which surrounds the inner tool (1) and the blank (4) in the form of a sleeve and is formed so as to be movable relatively and coaxially with respect to the inner tool (1) in the direction of the non-inflated end of the blank (4), **characterized in that** a peripheral groove (9) adjoining the turned-back end (7) of the inflatable bladder (3) is provided in the outer circumference of the inner tool (1) between the mandrel (2) and the inner sleeve (5), wherein the groove (9) has a minimum width of 3 mm.

6. Device according to Claim 5, **characterized in that** the sleeve (5) has at its end facing the mandrel (2) a contour of its circumference into which the turned-back end (7) of the inflatable bladder (3) that is closest to the sleeve (5) inserts itself.

7. Device according to Claim 5 or 6, **characterized in that** the ends (6; 7) of the inflatable bladder (3) are connected to the inner tool (1) by way of a clamping ring (12) arranged between the mandrel (2) and the inner sleeve (5).

8. Device according to Claim 7, **characterized in that** the ends (11) of the inner sleeve (5) and of the mandrel (2) that are opposite one another are formed conically and the clamping ring (12) has on both sides a conical inner contour (13, 14) that is respectively complementary.

9. Device according to Claims 5 to 8, **characterized in that** the inner sleeve (5) has in its wall holes through which the negative pressure applied in the inner sleeve (5) can act on the inner surface of the blank (4) lying in abutment on the outer side of the inner sleeve (5).

10. Device according to Claims 5 to 9, **characterized in that** the inner sleeve (5) is formed as at least partly expandable, whereby the inner surface of the blank (4) lying in abutment on the outer side of the sleeve (5) can be clamped.

11. Device according to Claims 5 to 10, **characterized in that** the inner sleeve (5) arranged coaxially with respect to the mandrel (2) is provided with a stop (16) for the abutment of the non-turned-back end of the blank (4).

12. Device according to Claims 5 to 11, **characterized in that** the hollow cylinder surrounding the blank in the form of a sleeve is provided with a locking location for the initial position before the turning back.

## Revendications

1. Procédé pour rabattre une ébauche non vulcanisée (4) d'un soufflet déroulant pour amortisseur pneumatique, dans lequel l'ébauche (4) est placée sur un outil intérieur (1) configuré en partie comme douille intérieure creuse (5) et en partie comme mandrin (2) doté de dispositifs d'actionnement et est évasée à au moins une extrémité sur une partie de sa longueur à l'aide d'un soufflet de soufflage (3) apte à s'évaser sous l'action d'une pression intérieure, jusqu'à ce qu'elle vienne se placer dans un outil extérieur (8) en forme de douille qui entoure l'outil intérieur (1) et l'ébauche (4), pour ensuite être rabattue sans anneau d'âme en déroulant le soufflet de soufflage (3) dans l'espace annulaire situé entre l'outil intérieur et l'outil extérieur (1; 8), tandis que pendant le rabattement, l'outil extérieur (8) est déplacé par rapport à l'outil intérieur (1) et coaxialement par rapport à ce dernier en direction de l'extrémité non gonflée de l'ébauche (4) jusqu'à ce que la totalité de la partie évasée de l'ébauche (4) soit successivement rabattue, le pli de rabat de l'ébauche (4) étant formé dans le contour extérieur de l'outil intérieur par une rainure annulaire périphérique (9) qui se raccorde entre le mandrin (2) et la douille intérieure (5) à l'extrémité rabattue (7) du soufflet de soufflage (3), la rainure (9) présentant une largeur minimale de 3 mm et l'ébauche (4) étant fixée sur l'outil intérieur (1) au moins pendant le rabattement.

2. Procédé selon la revendication 1, **caractérisé en ce que** l'ébauche (4) est immobilisée sur l'outil intérieur (1) pendant le rabattement par une dépression qui agit sur le côté intérieur de l'ébauche (4).

3. Procédé selon les revendications 1 ou 2, **caractérisé en ce que** pendant le rabattement, l'ébauche (4) est immobilisée par l'évasement d'une partie du l'outil intérieur (1).

4. Procédé selon les revendications 1 à 3, **caractérisé en ce que** le soufflet de soufflage (3) apte à être évasé présente une pression minimale telle que la partie rabattue de l'ébauche (4) est collée à froid sur elle-même.

5. Ensemble pour la mise en oeuvre du procédé selon les revendications 1 à 4, dans lequel l'outil intérieur (1) est constitué d'un mandrin (2) doté de dispositifs d'actionnement, entouré par un soufflet de soufflage (3) pour reprendre la longueur à rabattre de l'ébauche (4), et présente une douille intérieure (5) disposée coaxialement par rapport au mandrin (2) pour reprendre le reste de la longueur de l'ébauche (4), le soufflet de soufflage (3) entourant le mandrin (2) en forme de manchon et chacune des extrémités (6; 7) du soufflet de soufflage (3) étant rabattue vers l'intérieur à l'intérieur de ce dernier et fixée à un écart mutuel sur le mandrin (2) et/ou à l'extrémité de la douille intérieure (5), l'ensemble présentant comme outil extérieur un cylindre creux (8) qui entoure en forme de douille l'outil intérieur (1) et l'ébauche (4), configuré de manière à pouvoir être déplacé par rapport à l'outil intérieur (1) et coaxialement par rapport à ce dernier en direction de l'extrémité non gonflée de l'ébauche (4), **caractérisé en ce que**
une rainure périphérique (9) se raccordant entre le mandrin (2) et la douille intérieure (5) est prévue à la périphérie extérieure du l'outil intérieur (1) et se raccorde à l'extrémité (7) rabattue du soufflet de soufflage (3), la rainure (9) présentant une largeur minimale de 3 mm.

6. Ensemble selon la revendication 5, **caractérisé en ce que** la douille intérieure (5) présente à son extrémité tournée vers le mandrin (2) un contour de sa périphérie dans lequel l'extrémité (7) du soufflet de soufflage (3) rabattue et la plus proche de la douille intérieure (5) vient se placer.

7. Ensemble selon les revendications 5 ou 6, **caractérisé en ce que** les extrémités (6; 7) du soufflet de soufflage (3) sont reliées au l'outil intérieur (1) par une bague de serrage (12) disposée entre le mandrin (2) et la douille intérieure (5).

8. Ensemble selon la revendication 7, **caractérisé en ce que** les extrémités (11) mutuellement opposées de la douille intérieure (5) et du mandrin (2) sont de configuration conique et **en ce que** la bague de serrage (12) présente des deux côtés un contour intérieur (13, 14) conique complémentaire.

9. Ensemble selon les revendications 5 à 8, **caractérisé en ce que** la douille intérieure (5) présente dans sa paroi des alésages par lesquels une dépression appliquée dans la douille intérieure (5) peut agir sur la surface intérieure de l'ébauche (4) appliquée sur le côté extérieur de la douille intérieure (5) .

10. Ensemble selon les revendications 5 à 9, **caractérisé en ce que** la douille intérieure (5) est configurée de manière à pouvoir s'évaser au moins en partie, ce qui permet de serrer la surface intérieure de l'ébauche (4) appliquée sur le côté extérieur de la douille (5).

11. Ensemble selon les revendications 5 à 10, **caractérisé en ce que** la douille intérieure (5) disposée coaxialement par rapport au mandrin (2) est dotée d'une butée (16) qui vient se placer sur l'extrémité non rabattue de l'ébauche (4).

12. Ensemble selon les revendications 5 à 11, **caractérisé en ce que** le cylindre creux qui entoure en forme de douille l'ébauche est doté d'une position d'encliquetage pour la position initiale avant le rabattement.
